# EUROPEAN PATENT SPECIFICATION

(11) **EP 2 876 064 B1**
(45) Date of publication and mention of the grant of the patent: **14.09.2016**
(21) Application number: 14194819.0
(22) Date of filing: 25.11.2014
(51) Int. Cl.: B65G 47/86

(54) **Line to convey containers, in particular bottles**
Förderlinie zum Transportieren von Behältern, insbesondere Flaschen
Ligne de convoyage de récipients, en particulier de bouteilles

(30) Priority: 26.11.2013 IT TO20130960
(43) Date of publication of application: 27.05.2015
(73) Proprietor: Sidel S.p.a. Con Socio Unico, 43100 Parma (IT)
(72) Inventor: Proni, Angelo, 43100 Parma (IT); Raffaini, Nicola, 43100 Parma (IT); Zoni, Roberto, 43100 Parma (IT)
(74) Representative: Manconi, Stefano

(56) References cited:
- EP-A1- 2 159 172
- WO-A1-03/078285

## Description

The present invention relates to a line to convey containers, in particular bottles.

In the bottling industry, it is known to manufacture a line to convey bottles of the type normally comprising a plurality of feeding wheels, which are arranged in sequence to one another, being mounted so as to rotate in a continuous manner around respective first rotation axes, and are connected to each other in correspondence of respective transferring stations.

Each feeding wheel is provided with a plurality of pick and place units, which are uniformly distributed around the relevant first rotation axis, and are fed by the feeding wheel itself along a given path.

Each pick and place unit of at least part of the feeding wheels comprises a pair of picking members one defined by a crank and the other by a rocker arm which are mounted so as to rotate around respective second rotation axes parallel to each other between a clamping position and a releasing position of the respective bottle.

Generally, the crank comprises a substantially flat shaped jaw, which is limited by two major lateral faces parallel and opposite to one another, and has a sleeve, which protrudes from one of the major side faces, and houses in its inside a bushing which is coaxial to the respective second rotation axis.

The crank is coupled in a rotary manner to a support pin inserted inside the bushing coaxially to the respective second rotation axis, and also has a toothed ring, which is fitted on the sleeve, is coupled in angularly fixed manner to the sleeve, extends around the respective second rotation axis, and is coupled to a toothed ring which is mounted on the rocker arm.

The two picking members are moved, and normally maintained in their clamping position by a spring hooked to the rocker arm, and are moved into their releasing position, in correspondence to the aforementioned transferring stations, by a cam actuating device.

Such devices are known from WO 03/078285 A1 which discloses a conveying line according to the preamble of claim 1 and a method to manufacture a pick and place unit according to the preamble of claim 3.

The known lines to convey bottles of the type described above have some drawbacks mainly due to the fact that the crank has a relatively high number of components, being, therefore, relatively complex and costly, and involves relatively long assembly time.

It is an object of the present invention to provide a line to convey containers, in particular bottles, that is free from the drawbacks above described and which is simple and cheap to implement.

According to the present invention, there is provided a line to convey containers, in particular bottles, as claimed in claims 1 and 2.

The present invention further relates to a method for manufacturing a pick and place unit of a line to convey containers, in particular bottles.

According to the present invention, there is provided a method for manufacturing a pick and place unit of a line to convey containers, in particular bottles, as claimed in claims from 3 to 7.

The present invention will now be described with reference to the accompanying drawings, which illustrate a non-limiting embodiment, wherein:
Figure 1 is a schematic plan view, with parts removed for clarity, of a preferred embodiment of the conveying line of the present invention;
Figure 2 is a schematic plan view, with parts removed for clarity, of a detail of the conveying line of Figure 1;
Figure 3 is an exploded perspective view of the detail of Figure 2; and
Figures 4 and 5 illustrate two steps of the manufacturing process of a detail of Figures 2 and 3.

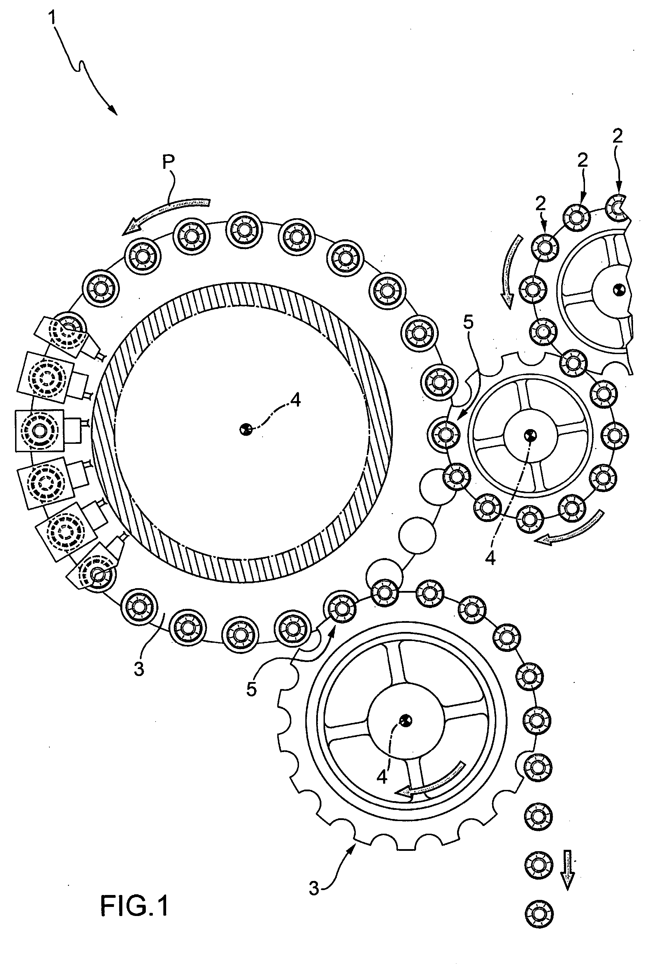

With reference to figure 1, with 1 is indicated, as a whole, a line to convey containers, in this case bottles 2, along a given path P.

The line 1 comprises a plurality of feeding wheels 3, which are mounted to rotate in a continuous manner around respective rotation axes 4 substantially vertical, being linked one to the other in correspondence of respective transferring stations 5, and are provided, each, with a respective plurality of pick and place units 6 uniformly distributed around respective axis 4.

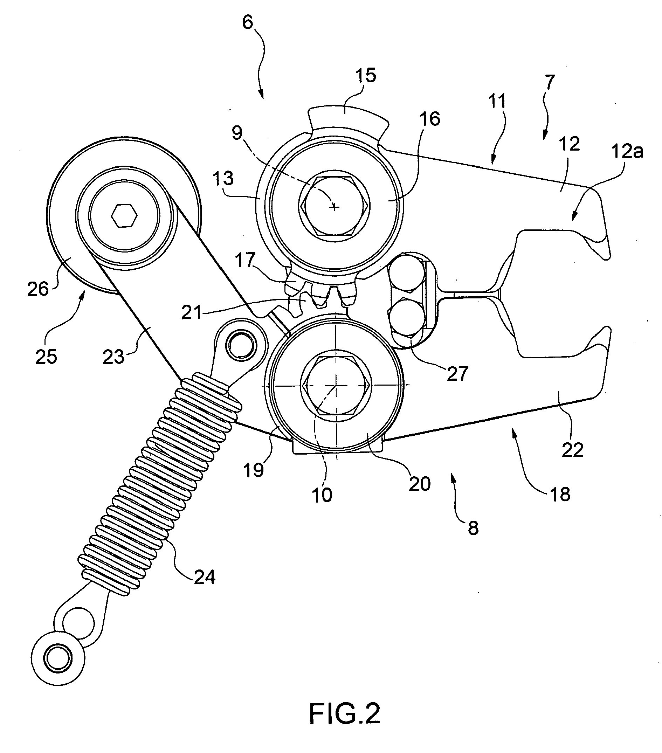

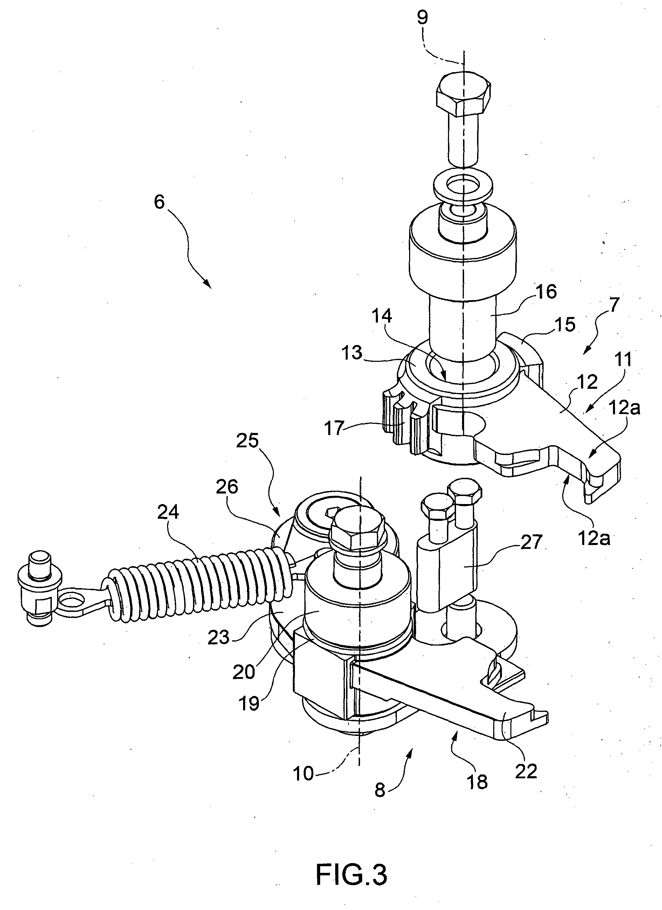

As illustrated in Figures 2 and 3, each unit 6 of at least part of the wheels 3 comprises two picking members 7, 8 which are mounted along a perimeter edge of the respective wheel 3 so as to rotate around respective rotation axes 9, 10 parallel to each other and to the axes 4, and are mobile with respect to one another between a clamping position and a releasing position of a bottle 2.

The member 7 comprises a crank 11 comprising, in turn, a substantially flat shaped jaw 12, which is made of a metallic material, in particular steel, and is limited by two major lateral faces 12a parallel and opposite one to the other.

The crank 11 is provided, also, with a tubular hub 13, which extends through the jaw 12, axially protruding from one of the faces 12a, and has a central coupling hole 14 which is coaxial to the axis 9.

The hub 13 is provided with a tooth 15, which has the shape of a cylindrical sector, extends around the axis 9, and radially projects outwards from the outer surface of the jaw 12.

The member 7 is connected in a rotary manner to a support pin 16 extending through the hole 14 coaxially with axis 9, and is further coupled to the member 8 by means of a gear 17, which extends around the axis 9, is manufactured on the opposite side of the tooth 15 with respect to the hub 13, and radially projects towards the outside from the outer surface of the jaw 12.

The hub 13, the tooth 15, and the gear 17 are manufactured as one single piece, in particular by injection moulding of a plastic material on the jaw 12.

The member 8 comprises a rocker arm 18, which is made of a metallic material, in particular steel, and has a central hub 19 which is coaxial to the axis 10.

The hub 19 axially protrudes from a major lateral face of the rocker arm 18, and houses inside a bushing (not shown) which is made of a plastic material, and is mounted through the hub 19, coaxially with the axis 10.

The rocker arm 18 is coupled in a rotary manner to a support pin 20 extending through the hub 19 coaxially with the axis 10, and is coupled, also, to the member 7 by means of a gear 21, which extends around the axis 10, radially projects outwards from the outer surface of the hub 19, and is coupled to the gear 17.

The rocker arm 18 has a first arm defining a shaped jaw 22 cooperating with the jaw 12, and a second arm 23.

The picking members 7, 8 are moved, and normally maintained in their clamping position by a spring 24 interposed between a support frame (not shown) of the respective wheel 3 and the arm 23, and are moved from their clamping position in their releasing position, in correspondence of the respective transferring stations 5, by a cam actuating device 25 comprising, for each pick and place unit 6, at least one respective tappet roller 26 which is mounted on the arm 23 itself.

The unit 6 comprises furthermore a limit stop device 27, which is made of plastic material, and which is mounted between the two jaws 12, 22 to stop the jaws 12, 22 in their clamping position in the absence of bottle 2 so as to avoid the collision between the jaws 12, 22, namely between the metallic parts of the members 7, 8.

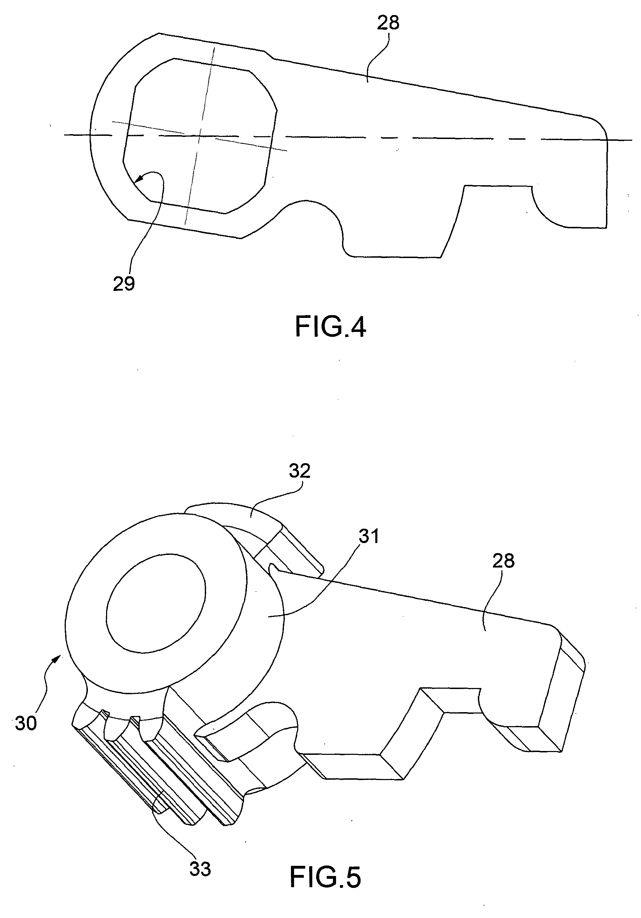

With reference to Figures 4 and 5, the member 7 is manufactured starting from a flat plate 28 made of a metal material having a shaped hole 29 and from a sleeve 30 which is made of a plastic material, which is injection moulded on the plate 28, extending through the hole 29, and is symmetrical with respect to a symmetry plane of the plate 28 itself.

The sleeve 30 comprises a bushing 31 coaxial to the axis 9; a cylindrical sector 32, which extends around the axis 9, and radially projects outwards from the outer surface of the plate 28; and a toothed sector 33, which extends around the axis 9, radially projects outwards from the outer surface of the plate 28, and is obtained on the opposite side of the cylindrical sector 32 with respect to the bushing 31.

In other words, the bushing 31, the cylindrical sector 32, and the toothed sector 33 are manufactured as one single piece by means of the injection moulding operation on the plate 28.

Once the injection moulding operation is performed:
one of the portions of the sleeve 30 that project axially from one of the major lateral faces of the plate 28 is cut transversely to the axis 9 so as to form the hub 13 from the sleeve 30, the tooth 15 from the cylindrical sector 32, and the gear 17 from the toothed sector 33;
the inner surface of the hub 13 is machined to manufacture the hole 14 and receive the pin 16; and
the plate 28 is machined by chip removal to manufacture the jaw 12.

In this regard, it should be noted that the portion of the sleeve 30 to be cut is chosen depending on whether the member 7 is to be mounted in the rear or in front in an advancement direction of the respective wheel 3 around the respective axis 4.

The pick and place units 6 have some advantages mainly due to the fact that:
the injection moulding of the sleeve 30 on the plate 28 allows to manufacture a picking member 7, which is relatively simple and economical, comprising a relatively small number of components, and has relatively reduced assembly times; and
the symmetry of the sleeve 30 with respect to the plate 28 allows to manufacture all the members 7 just starting from one component defined by the plate 28 and by the sleeve 30.

According to some variations not shown:
the hub 19 and the gear 21 of the member 8 are manufactured as one single piece by injection moulding of a plastic material on the rocker arm 18; and
the sleeve 30 is injection molded directly on the jaw 12.

## Claims

1. A line to convey containers (2), in particular bottles, the line comprising a conveying device (3), which is provided with a plurality of pick and place units (6), each of which is configured to hold a respective container (2), is fed by the conveying device (3) along a given path (P), and comprises two picking members (7, 8), which are mobile relative to one another between a clamping position, in which they clamp the container (2), and a releasing position, in which they release the container (2); each picking member (7, 8) comprising a support pin (16, 20) having a longitudinal axis (9, 10), a hub (13, 19), which is fitted on the support pin (16, 20) in a rotary manner so as to rotate around said longitudinal axis (9, 10), and a gear (17, 21), which extends around said longitudinal axis (9, 10), and is coupled to the gear (17, 21) of the other picking member (7, 8); the hub (13) and the gear (17) of at least one first said picking member (7) being manufactured as one single piece; and being **characterized in that** the first picking member (7) comprises, furthermore, a shaped jaw (12), which is made of a metal material and has a hole (29) that is coaxial to the relative longitudinal axis (9); the hub (13) and the gear (17) of the first picking member (7) being manufactured by moulding a plastic material through - and around - the hole (29).

2. A line according to claim 1, wherein the first picking member (7) comprises, furthermore, a tooth (15), which radially projects from an outer surface of the hole (29), and is arranged on the opposite side of the gear (17) relative to the hub (13); the hub (13), the tooth (15), and the gear (17) of the first picking member (7) being manufactured as one single piece.

3. A method to manufacture a pick and place unit (6) of a conveying line to convey containers (2), in particular bottles, the pick and place unit (6) comprising two picking members (7, 8), which are mobile, relative to one another between a clamping position, in which they clamp the container (2), and a releasing position, in which they release the container (2), each picking member (7, 8) comprising a shaped jaw (12, 22), a support pin (16, 20) extending through the shaped jaw (12, 22), a hub (13, 19), which is fitted on the support pin (16, 20) in a rotary manner so as to rotate around a longitudinal axis (9, 10) of the support pin (16, 20), and a gear (17, 21), which extends around said longitudinal axis (9, 10), and is coupled to the gear (17, 21) of the other picking member (7, 8); the method being **characterised in that** it comprises the step of:
manufacturing the hub (13) and the gear (17) of at least one picking member (7) as one single piece by moulding a plastic material on a support plate (28).

4. A method according to claim 3, wherein the support plate (28) has the shape of the shaped jaw (12).

5. A method according to claim 3 and comprising, furthermore, the step of:
shaping the support plate (28) so as to manufacture the shaped jaw (12).

6. A method according to any of the claims from 3 to 5 and comprising, furthermore, the steps of:
moulding, on the support plate (28), a sleeve (30), which is made of a plastic material, extends through the support plate (28), is symmetrical relative to a symmetry plane of the support plate (28), and comprises a bushing (31), which is coaxial to the relative longitudinal axis (9), and a toothed sector (33), which is obtained on an outer surface of the bushing (31) and is manufactured as one single piece together with the bushing (31) itself; and
separating from the sleeve (30) a portion of the sleeve (30) that projects from one of the larger lateral faces of the support plate (28), so as to manufacture the hub (13) starting from the bushing (31) and the gear (17) starting from the toothed sector (33).

7. A method according to any of the claims from 3 to 6, wherein the support plate (28) is made of a metal material.

## Patentansprüche

1. Eine Förderlinie zum Transportieren von Behältern (2), insbesondere Flaschen, wobei die Förderlinie eine Fördereinrichtung (3) umfasst, die mit einer Vielzahl von Bestückungs-Einheiten (6) versehen ist, die jeweils zum Halten eines jeweiligen Behälters (2) ausgelegt sind, von der Fördereinrichtung (3) entlang einer gegebenen Strecke (P) transportiert werden und zwei Aufnahme-Elemente (7, 8) umfassen, die zueinander beweglich sind zwischen einer Klemmposition, in der sie den Behälter (2) umgreifen, und einer Freigabe-Position, in der sie den Behälter (2) freigeben, wobei jedes Aufnahme-Element (7, 8) einen Aufnahmestift (16, 20) mit einer Längsachse (9, 10), einer Nabe (13, 19), die auf den Aufnahmestift (16, 20) drehbar aufgeschoben ist, so dass sie sich um die Längsachse (9, 10) dreht, sowie ein Zahnrad (17, 21) umfasst, das sich um die Längsachse (9, 10) herum erstreckt und mit dem Zahnrad (17, 21) des anderen Aufnahme-Elements (7, 8) gekoppelt ist, wobei die Nabe (13) und das Zahnrad (17) von zumindest einem ersten Aufnahme-Element (7) in einem einzigen Stück hergestellt sind, **dadurch gekennzeichnet, dass** das erste Aufnahme-Element (7) ferner eine Formbacke (12) umfasst, die aus einem Metall-Material hergestellt ist und eine Öffnung (29) aufweist, die koaxial zu der jeweiligen Längsachse (9) ist, wobei die Nabe (13) und das Zahnrad (17) des ersten Aufnahme-Elements (7) durch Gießen eines Kunststoff-Materials durch und um die Öffnung (29) hergestellt werden.

2. Eine Förderlinie gemäß Anspruch 1, wobei das erste Aufnahme-Element (7) ferner einen Zahn (15) umfasst, der radial von einer Außenfläche der Öffnung (29) vorsteht und bezüglich der Nabe (13) auf der gegenüberliegenden Seite des Zahnrads (17) angeordnet ist, wobei die Nabe (13), der Zahn (15) und das Zahnrad (17) des ersten Aufnahme-Elements (7) in einem einzigen Stück hergestellt sind.

3. Ein Verfahren zur Herstellung einer Bestückungs-Einheit (6) einer Förderlinie zum Transport von Behältern (2), insbesondere Flaschen, wobei die Bestückungs-Einheit (6) zwei Aufnahme-Elemente (7, 8) umfasst, die zueinander beweglich sind zwischen einer KlemmPosition, in der sie den Behälter (2) umfassen, und einer Freigabe-Position, in der sie den Behälter (2) freigeben, wobei jedes Aufnahme-Element (7, 8) eine Formbacke (12, 22), einen sich durch die Formbacke (12, 22) hindurch erstreckenden Aufnahmestift (16, 20), eine Nabe (13, 19), die drehbar auf den Aufnahmestift (16, 20) aufgeschoben ist, so dass sie sich um eine Längsachse (9, 10) des Aufnahmestifts (16, 20) dreht, sowie ein Zahnrad (17, 21) umfasst, das sich um die Längsachse (9, 10) herum erstreckt und mit dem Zahnrad (17, 21) des anderen Aufnahme-Elements (7, 8) gekoppelt ist, wobei das Verfahren **dadurch gekennzeichnet ist, dass** es den folgenden Schritt umfasst:
- Herstellen der Nabe (13) und des Zahnrads (17) von zumindest einem Aufnahme-Element (7) in einem einzigen Stück durch Gießen eines Kunststoff-Materials auf eine Aufnahme-Platte (28).

4. Ein Verfahren gemäß Anspruch 3, wobei die Aufnahme-Platte (28) die Form der Formbacke (12) aufweist.

5. Ein Verfahren gemäß Anspruch 3, ferner umfassend den folgenden Schritt:
- Ausformen der Aufnahme-Platte (28) zur Herstellung der Formbacke (12).

6. Ein Verfahren gemäß einem der Ansprüche 3 bis 5, ferner umfassend die folgenden Schritte:
- Gießen, auf der Aufnahme-Platte (28), einer Hülse (30), die aus einem Kunststoff-Material hergestellt ist, sich durch die Aufnahme-Platte (28) hindurch erstreckt, zu einer Symmetrie-Ebene der Aufnahme-Platte (28) symmetrisch ist, und eine Buchse (31), die zu der jeweiligen Längsachse (9) koaxial ist, sowie einen Zahnsektor (33) umfasst, der auf einer Außenfläche der Buchse (31) realisiert und in einem Stück zusammen mit der Buchse (31) hergestellt wird, und
- Abtrennen von der Hülse (30) eines Abschnitts der Hülse (30), der von einer der größeren Seitenflächen der Aufnahme-Platte (28) vorsteht, zur Herstellung der Nabe (13) ausgehend von der Buchse (31) und des Zahnrads (17) ausgehend von dem Zahnsektor (33).

7. Ein Verfahren gemäß einem der Ansprüche 3 bis 6, wobei die Aufnahme-Platte (28) aus einem Metall-Material hergestellt ist.

## Revendications

1. Ligne de convoyage de contenants (2), en particulier de bouteilles, la ligne comprenant un dispositif de convoyage (3), qui est pourvu d'une pluralité d'unités de prélèvement et placement (6), dont chacune est configurée pour tenir un contenant (2) respectif, est alimentée par le dispositif de convoyage (3) le long d'un chemin donné (P), et comprend deux organes de prélèvement (7, 8), qui sont mobiles l'un par rapport à l'autre entre une position de serrage, dans laquelle ils serrent le contenant (2), et une position de libération, dans laquelle ils libèrent le contenant (2) ; chaque organe de prélèvement (7, 8) comprenant une broche de support (16, 20) ayant un axe longitudinal (9, 10), un moyeu (13, 19), qui est ajusté sur la broche de support (16, 20) de manière rotative de façon à tourner autour dudit axe longitudinal (9, 10), et un engrenage (17, 21), qui s'étend autour dudit axe longitudinal (9, 10), et est couplé à l'engrenage (17, 21) de l'autre organe de prélèvement (7, 8) ; le moyeu (13) et l'engrenage (17) d'au moins un premier dit organe de prélèvement (7) étant fabriqués en une seule pièce ; et **caractérisée en ce que** l'organe de prélèvement (7) comprend, de plus, une mâchoire façonnée (12), qui est constituée d'un matériau métallique et comporte un trou (29) qui est coaxial avec l'axe longitudinal (9) relatif ; le moyeu (13) et l'engrenage (17) du premier organe de prélèvement (7) étant fabriqués par moulage d'une matière plastique à travers le trou (29) et autour de celui-ci.

2. Ligne selon la revendication 1, dans laquelle le premier organe de prélèvement (7) comprend, de plus, une dent (15), qui fait radialement saillie depuis une surface externe du trou (29), et est agencée sur le côté opposé de l'engrenage (17) par rapport au moyeu (13) ; le moyeu (13), la dent (15), et l'engrenage (17) du premier organe de prélèvement (7) étant fabriqués en une seule pièce.

3. Procédé de fabrication d'une unité de prélèvement et placement (6) d'une ligne de convoyage pour convoyer des contenants (2), en particulier des bouteilles, l'unité de prélèvement et placement (6) comprenant deux organes de prélèvement (7, 8), qui sont mobiles l'un par rapport à l'autre entre une position de serrage, dans laquelle ils serrent le contenant (2), et une position de libération, dans laquelle ils libèrent le contenant (2) ; chaque organe de prélèvement (7, 8) comprenant une mâchoire façonnée (12, 22), une broche de support (16, 20) s'étendant à travers la mâchoire façonnée (12, 22), un moyeu (13, 19), qui est ajusté sur la broche de support (16, 20) de manière rotative de façon à tourner autour d'un axe longitudinal (9, 10) de la broche de support (16, 20), et un engrenage (17, 21), qui s'étend autour dudit axe longitudinal (9, 10), et est couplé à l'engrenage (17, 21) de l'autre organe de prélèvement (7, 8) ; le procédé étant **caractérisé en ce qu'**il comprend l'étape de :
fabrication du moyeu (13) et de l'engrenage (17) d'au moins un organe de prélèvement (7) en une seule pièce par moulage d'une matière plastique sur une plaque de support (28).

4. Procédé selon la revendication 3, dans lequel la plaque de support (28) a la forme de la mâchoire façonnée (12).

5. Procédé selon la revendication 3, et comprenant, de plus, l'étape de :
façonnage de la plaque de support (28) de manière à fabriquer la mâchoire façonnée (12).

6. Procédé selon l'une quelconque des revendications 3 à 5 et comprenant, de plus, les étapes de :
moulage, sur la plaque de support (28), d'un manchon (30), qui est constitué d'une matière plastique, s'étend à travers la plaque de support (28), est symétrique par rapport à un plan de symétrie de la plaque de support (28), et comprend une douille (31), qui est coaxiale avec l'axe longitudinal (9) relatif, et un secteur denté (33), qui est obtenu sur une surface externe de la douille (31) et est fabriqué en une seule pièce conjointement avec la douille (31) elle-même ; et
séparation du manchon (30) d'une portion du manchon (30) qui fait saillie depuis l'une des plus grandes faces latérales de la plaque de support (28), de manière à fabriquer le moyeu (13) en démarrant à partir de la douille (31) et l'engrenage (17) en démarrant à partir du secteur denté (33).

7. Procédé selon l'une quelconque des revendications 3 à 6, dans lequel la plaque de support (28) est constituée d'un matériau métallique.
